(19) Europäisches Patentamt / European Patent Office / Office européen des brevets

(11) **EP 3 309 525 B1**

(12) **EUROPEAN PATENT SPECIFICATION**

(45) Date of publication and mention
of the grant of the patent:
**06.02.2019 Bulletin 2019/06**

(51) Int Cl.:
***G01K 7/25*** *(2006.01)*

(21) Application number: **17156676.3**

(22) Date of filing: **17.02.2017**

(54) **ANALOG CIRCUIT FOR WIDE RANGE SENSOR LINEARIZATION OPTIMAL IN UNIFORM NORM**

ANALOGE SCHALTUNG ZUR LINEARISIERUNG EINES SENSORS OPTIMAL IN UNIFORMER NORM MIT BREITEM BEREICH

CIRCUIT ANALOGIQUE POUR UNE LINÉARISATION DE CAPTEUR À GAMME ÉTENDUE OPTIMALE EN NORME UNIFORME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2016 TR 201614439**

(43) Date of publication of application:
**18.04.2018 Bulletin 2018/16**

(73) Proprietor: **Yeditepe Universitesi**
**34755 Istanbul (TR)**

(72) Inventor: **ALI UMIT, Keskin**
**34752 ISTANBUL (TR)**

(74) Representative: **Dericioglu Kurt, Ekin**
**Ankara Patent Bureau Limited**
**Kavaklidere Mahallesi**
**Bestekar Caddesi No: 10**
**06680 Cankaya, Ankara (TR)**

(56) References cited:
**US-A1- 2008 028 853     US-A1- 2009 063 070**

• **Bonnie C Baker: "Thermistors in Single Supply Temperature Sensing Circuits", , 1 January 1999 (1999-01-01), XP055384617, Retrieved from the Internet: URL:http://ww1.microchip.com/downloads/en/ AppNotes/00685b.pdf [retrieved on 2017-06-23]**
• **SARKAR ALOKE RAJ ET AL: "Linearization of NTC Thermistor Characteristic Using Op-Amp Based Inverting Amplifier", IEEE SENSORS JOURNAL, IEEE SERVICE CENTER, NEW YORK, NY, US, vol. 13, no. 12, 1 December 2013 (2013-12-01), pages 4621-4626, XP011528815, ISSN: 1530-437X, DOI: 10.1109/JSEN.2013.2267332 [retrieved on 2013-10-04]**

**EP 3 309 525 B1**

**Description**

**Field of the Invention**

This invention relates generally to non-linear sensor response linearization systems, and more particularly to analog wide range linearization systems and methods. It is also to be noted here that present invention is related to analog systems (of sensor and connected circuit) linearity improvement.

**Background of the Invention**

Negative Temperature Coefficient (NTC) thermistors have very high resistance - temperature sensitivity (its resistance decreases exponentially as the temperature of the thermistor increases), which makes thermistors very attractive components to be used for the detection of small changes in temperature, besides their pricing advantages (due to relatively simple and cheap preparation technology requirement). However, thermistors possess highly nonlinear resistance-temperature (R-T) characteristics. It may be required to linearize these characteristics using analog, digital or mixed methods.

Analog methods described for the linearization of NTC thermistor (R-T) characteristics are simpler, faster (practically without any measurement delay) and can be more cost effective than most digital techniques available for the same purpose (e.g., soft computing techniques and on-line numerical methods, lookup table being the most common, employing a special read-only memory or an analog-to-digital converter).

Therefore, design of analog front-end and pre-processing circuits becomes advantageous even if these stages can be followed by digital signal processors, so that overall efficiency of these systems is maximized.

In the previous art, numerous analog circuits are proposed for obtaining a linearization of resistance versus temperature characteristics of NTC thermistors. These circuits may involve a single series or parallel resistor element to the sensor, or their combinations. Logarithmic amplifier based systems, and multivibrator circuits with frequency output are other types of analog NTC thermistor linearization circuits that have been presented in previous art.

Most previous art deal with lower temperature ranges of linear operation. Circuits proposed in most previous art consist of analog complexity of devices and methods proposed thereof. Most previous art do not analyze approximation error, in detail. Most previous art deal with single analog thermistor linearization topologies, and do not consider multi-sensor networks. Some of previous art employ exponential thermistor equation, which is not suitable for a wide temperature range implementation.

A previous art introduces a linearizing circuit topology and derivations and variants thereof (US Patent 20090063070A1, C.P. Renneberg, "A circuit and method for fitting the output of a sensor to a predetermined linear relationship", Mar. 05, 2009, and also C. Renneberg, T. Lehmann, "Analog circuits for thermistor linearization with Chebyshev-optimal linearity error", 18th European Conference on Circuit Theory and Design, pp 910-913, 2007). Basis of the circuit introduced in this previous art is a half bridge (voltage divider) configuration where a thermistor is placed on one of its branches.

**References**

- CN104505202, "A Linearized correction method and device of thermistor", 16 Ara 2014.
- WO2009145629 A1, T. Tiek, P. T. J. Gennissen "Arrangement for linearizing a non-linear sensor", Dec.03, 2009.
- US20090063070A1, C.P. Renneberg, "A circuit and method for fitting the output of a sensor to a predetermined linear relationship", Mar. 05, 2009.
- US6449571, F. Tarig and T.I. Pattantyus. "System and method for sensor response linearization", Sep. 2002.
- NL9301409 (A), C.M.E. Peters, M.J. Groot, "Temperature-measuring device, and linearization circuit suitable for use in such a device", 01.05.1997.
- JPO 05-060621, M. Kazunari, "Processing Method for Linearization of Temperature Sensor", 12.03.1993.
- US005116136A W.H. Newman et.al, "Temperature Measurements Using Thermistor Elements, May 26, 1992.
- CN88203185 U, "Thermistor linearized device", 05 Oct.1988.
- PL243159 (A1), A. Roman; S. Seweryn; K. Jerzy "Method of Linearization of Resistance-Temperature Characteristic of Thermistor", 30.Jan.1985.
- US4556330 A, P. Regtien, "Resistance thermometer and linearization circuitry", 03 Dec.1985.
- US4148220 A, W. R. Spofford, "Linearization Means and Method for a Thermistor Temperature Sensing System", 10 Apr. 1979.
- US4132116 H.E. Zeeb, "Method for Linearizing the Characteristic Curve of an Electronic Component and Apparatus for Implementing the Same", Jan. 2, 1979.

- US4106341, J. J. Serrano, "Linearized Thermistor Temperature Measuring Circuit", Aug. 15, 1978.
- US4215336 A, T.W.Smith, "Apparatus and method for stabilization of a thermistor temperature sensor", 17 Apr. 1978.
- US4060715A, L. B. Scott, "Linearized Bridge Circuitry", 29 Nov 1977.
- US3766782, A. Shimamura, "Temperature measuring apparatus", Oct. 23, 1973.
- US3652921, L. N. Nye, "Linearized thermistor networks", March 1972.
- US3316765, H. W. Trolander and R. W. Harruff, "Extended range thermistor temperature sensing", May 1967.
- US3185974, R.C. Doane, Fire Detection System, May 25, 1965.
- US2764731, L. F. Koerner "Thermistor Network", Sept.25, 1956.
- J. Lukic, D. Denic, "A Novel Design of an NTC Thermistor Linearization Circuit", Metrol. Meas. Syst., Vol. 22, No. 3, pp. 351-362, 2015.
- M. Biegert, "Linearize thermistors with new formula", EDN, March 03, 2014.
- Lopez-Martin, A.J., Carlosena, A. Sensor signal linearization techniques: a comparative analysis. Proc. of IEEE LASCAS 2013. Cusco, Peru, pp: 1-4, 2013.
- A. R. Sarkar, D. Dey, S. Munshi, "Linearization of NTC Thermistor Characteristic Using Op-Amp Based Inverting Amplifier", IEEE Sensors Journal, Vol. 13, No. 12, pp: 46-21, December 2013.
- X. Wang, G. Wei, and J. Sun, "Free knot recursive B- spline for compensation of nonlinear smart sensors," Measurement, vol. 44, no. 5, pp. 888-894, 2011.
- N. Madhu Mohan, V. Jagadeesh Kumar, and P. Sankaran, "Linearizing dual-slope digital converter suitable for a thermistor," IEEE Trans. Instrum. Meas., vol. 60, no. 5, pp. 1515-1521, Dec. 2010.
- A. U. Keskin, "Comments on the Sensor calibration and compensation using artificial neural network", ISA Transactions, 48 143-144, 2009.
- J. River, G. Herrera, and M. Chacon, "Improved progressive polynomial algorithm for self-calibration and optimal response in smart sensors," Measurement, vol. 42, no. 9, pp. 1395-1401, 2009.
- Z. P. Nenova and T. G. Nenov, "Linearization circuit of the thermistor connection," IEEE Trans. Instrum. Meas., vol. 58, no. 2, pp. 441-449, Feb. 2009.
- A. Abudhahir and S. Baskar, "An evolutionary optimized nonlinear function to improve the linearity of transducer characteristics," Meas.Sci. Technol., vol. 19, no. 4, pp. 72-76, Apr. 2008.
- V. C. Rosa, L. S. Palma, A. Oliveira, and T. R. Torres, "An inherently linear transducer using thermistor practical approach, "in Proc. 3rd Int. Conf. Sens. Technol., 2008, pp. 491-495.
- J.C. Patra, G. Chakraborty, P.K. Meher, "Neural network-based robust linearization and compensation technique for sensors," IEEE Trans.Circuits Syst. I, vol. 55, no. 5, pp. 1316-1327, Jun. 2008.
- C. Renneberg, T. Lehmann, "Analog circuits for thermistor linearization with Chebyshev-optimal linearity error", 18th European Conference on Circuit Theory and Design, pp 910- 913, 2007.
- A U Keskin, "A simple analog behavioural model for NTC thermistors including selfheating effect", Sensors and Actuators A 118 pp: 244-247, 2005.
- A U Keskin, T.M.Yanar, "Steady-state solution of loaded thermistor problems using an electrical equivalent circuit model", Meas. Sci. Technol. 15 pp: 2163-2169, 2004.
- S. Kaliyugavaradan, P. Sankaran, G.K. Murtiv, A new compensation scheme for thermistors and its implementation for response linearization over a wide temperature range, IEEE Transactions on Instrumentation and Measurement 42 (5) pp: 952-956, 1993.
- D. Patranabis, S. Ghosh, and C. Bakshi, "Linearizing transducer characteristics, "IEEE Trans. Instrum. Meas., vol. 37, no. 1, pp. 66-69, Mar. 1988.
- D. K. Stankovic, "Linearized thermistor multivibrator bridges for temperature measurement," IEEE Trans. Instrum. Meas., vol. IM-23, no. 2, pp. 179-180, Mar. 1974.
- F.N. Trofimenkoff and R.E. Smallwood, "Analog multiplier circuit linearizes transducer output," IEEE Trans. Instrum. Meas., vol. IM-23, no. 3, pp. 195-197, Sep. 1974.
- M. B. Broughton, "Analysis and Design of Almost-Linear One- Thermistor Temperature Transducers", IEEE Trans. on Instrum. Meas., Vol. Im-23, No. 1, March 1974.

## Objects of the Invention

The subject matter of the present application has been developed in response to the need for new alternatives and improvements of the present state of the art concerning wide range linearization of sensors having nonlinear behavior, employing relatively simple analog electronics. Sensors of consideration are particularly (but not limited to) negative temperature coefficient (NTC) thermistors which are used in zero power state, thus greatly reducing self-heating effects on resistance of these elements. In other embodiments of the present invention, the sensors ($R_{T1}$, $R_{T2}$, $R_{T3}$, $R_{TK}$, $R_{TO}$) can be selected from a group comprising; nonlinear resistive optical light dependent resistors (LDRs); nonlinear resistive chemiresistors; nonlinear resistive bio-sensors; or semiconducting magneto-resistive type sensors.

The linearization circuit disclosed in the present invention comprises; a sensor circuit having a plurality of sub-circuits connected parallel to each other and each of which comprising a resistive sensor connected in series with a resistor; and an inverting operational amplifier which has a feedback path where a resistive sensor of the same type as in the sub-circuits is connected and whose inverting input is connected to the sensor circuits. It can be possible with the present invention to obtain a measurement linearity of response (using a simple analog electronic circuit topology that contains minimal amount of components) within minimum linearity deviations of the physical property over a given wide range of the physical property. It is to be remarked here that in terminology of thermistors technology, the terms "wide" or "extended" temperature range means a temperature range of at least 100°C (for example, between 0°C and 100°C, or between -20°C and 80°C) coverage.

It is the principal object of the present invention to provide an accurate, reliable linear operating physical property measurement device which is highly stable, fast-acting, inexpensive and yet simple to design and manufacture. Generally speaking, this is accomplished by the provision of a novel multiple sensor based single operational amplifier circuit in all forms of circuits described herein. Therefore, the present invention becomes especially useful for measuring/controlling a physical property in an analog front-end circuit providing relatively wide and linear range, particularly employing plurality of sensors.

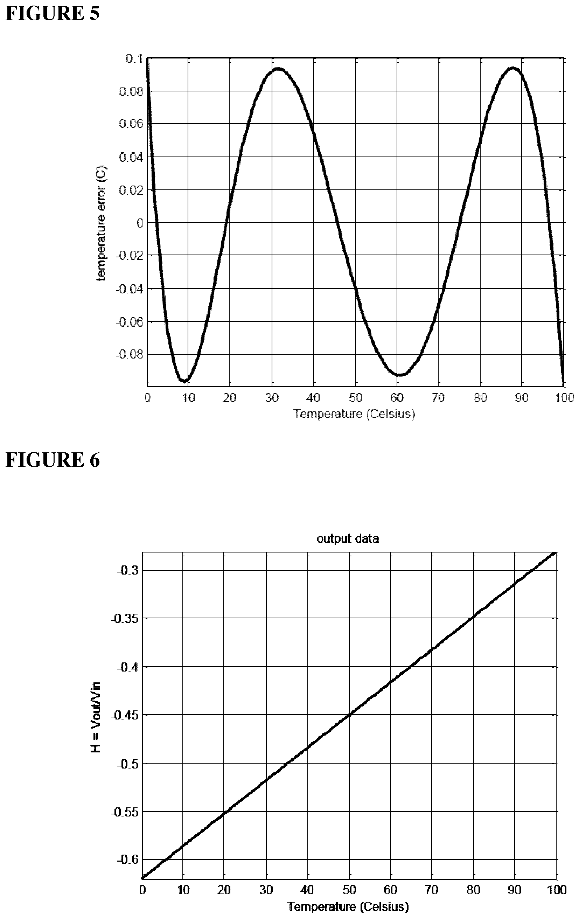

The novel circuit topology and design method presented herein provide optimal sensor linearization in uniform norm sense. For thermistors, for example, it can be possible with this invention to obtain temperature measurement linearity of less than 0.004°C over a 100°C range, using three thermistors at the input section of integrated circuit. This is less than half the measurement linearity value that can be provided by the circuit introduced in a previous art. (US Patent 20090063070A1, C.P. Renneberg, Fig. 5).

Increasing the order of Voltage Transfer Function (VTF) may introduce stability and sensitivity problems. Therefore, it is better to reduce the linearity error without increasing the order of VTF. Additionally, it can be more difficult to solve an optimization problem for larger values of transfer function orders.

## Detailed Description of the Invention

The linearization circuit in order to fulfill the objects of the present invention is illustrated in the attached figures, where:

**FIG. 1** shows the circuit diagram embodying the preferred embodiments of the present invention.
**FIG. 2** shows the Resistance versus Temperature characteristic curve of a thermistor. This curve is plotted using SPICE data provided by the manufacturer (EPCOS TDK model C620/2200)
**FIG. 3** shows the linearized Voltage Transfer Function (VTF) versus thermistor temperature T for the circuit of FIG.1, within the temperature range of 0°C and 100°C , when it has two identical thermistors at the input section (n=2) and one on the feedback path of op-amp, and the circuit has following component values: Thermistor type : EPCOS-TDK model C620/2200, $k_1$= 0.23936 V/V, $k_2$= 0.3911 V/V, $R_1$=3939.8 ohms, $R_2$ = 204.79 ohms. Slope= M= 3.1848 mV/°C, Intercept= N = - 0.52117 V.
**FIG. 4** shows the Voltage Transfer Function error for n=2, under the conditions specified for FIG.3.
**FIG. 5** shows the Temperature linearity error for n=2, under the conditions specified for FIG.3.
**FIG. 6** depicts a calculated plot of VTF versus thermistor temperature T for the circuit of FIG1, within the temperature range of 0°C and 100°C, when it has three identical thermistors at the input section (n=3) and one on the feedback path of op-amp, and the circuit has following component values: Thermistor type is EPCOS-TDK model C620/2200, $k_1$=0.20086 V/V, $k_2$=0.19776 V/V, $k_3$=0.38436 V/V, $R_1$=9947.8 ohms, $R_2$=1010.8 ohms, $R_3$=112.51 ohms. Slope = M = 3.3944 mV/°C, intercept = N = - 0.62 V.
**FIG. 7** shows the Error in Voltage Transfer Function approximation, under the conditions specified for FIG.6.
**FIG. 8** shows the temperature linearity error calculated for n=3, under the conditions specified for FIG.6.

Elements shown in the figures are numbered as follows:

**1.** Linearization circuit
**2.** Sensor circuit
**3.** Operational amplifier
**4.** Feedback path
**5.** Inverting input
**6.** Non-inverting input
$R_{T1}, R_{T2}, R_{T3}, R_{Tk}, R_{TO}$ Sensor
$R_1, R_2, R_3, R_k$ Resistor

$V_{ik}$, $V_{i1}$, $V_{i2}$, $V_{i3}$. Input voltage
$V_0$. Output voltage

The present invention disclosed herein includes a plurality of physical property sensing sections for extending previously linearized characteristics of single thermistor analog circuits with respect to temperature. This is accomplished by the provision of a novel multiple sensor ($R_{T1}$, $R_{T2}$, $R_{T3}$, $R_{TK}$, $R_{TO}$) based single operational amplifier (3) circuit in all forms of circuits described herein.

The inventive linearization circuit (1) for linearizing of resistive sensors ($R_{T1}$, $R_{T2}$, $R_{T3}$, $R_{TK}$) having nonlinear behavior, comprises;

- a sensor circuit (2) having a plurality of sub-circuits connected parallel to each other and each of which comprises a resistive sensor ($R_{T1}$, $R_{T2}$, $R_{T3}$, $R_{TK}$) and a resistor ($R_1$, $R_2$, $R_3$, $R_k$),
- an inverting operational amplifier (3) having a feedback path (4) where a resistive sensor ($R_{TO}$) of the same type in the sub-circuits is connected, and whose inverting input (5) is connected to the sensor circuit (2).

The linearization circuit (1) described herein consists of three different analog components, namely a plurality of sensors ($R_{T1}$, $R_{T2}$, $R_{T3}$, $R_{TK}$) (e.g., NTC thermistors) whose values are pre-selected, resistors ($R_1$, $R_2$, $R_3$, $R_k$), values of which can be pre-determined by mathematical techniques, e.g., various optimization methods, and an operational amplifier (3).

NTC thermistors, that show typically large nonlinear behavior, are selected as illustrative particular example application field of the invention that has been disclosed herein. It will be understood that the principles outlined herein may be applied to other types of nonlinear resistive sensors described below, as well.

In one embodiment of the present invention, the sensors ($R_{T1}$, $R_{T2}$, $R_{T3}$, $R_{TK}$, $R_{TO}$) are nonlinear resistive chemiresistors that changes its electrical resistance in response to changes in the nearby chemical environment. In many cases, the resistance change is a non-linear function of the analyte concentration. Several different materials have chemiresistor properties: metal oxide semiconductors, some conductive polymers, and carbon nanotubes (CNTs). For example, CNTs are used as chemical and biological sensors for low-power applications, and they are highly sensitive. CNTs also have nanometer range diameters and all the atoms exposed on the surface. This allows miniaturization and means for chemical coating to achieve high selectivity to specific chemical agents. CNT sensors exhibit fast response time to gases. On the other hand, metal oxide sensors, are primarily gas sensors, and they can sense both oxidizing and reducing gases. Oxides of Tin, Molybdenum, Chromium, Indium, Zinc, Titanium and Tungsten are well known sensors of this kind.

In one embodiment of the present invention, the sensors ($R_{T1}$, $R_{T2}$, $R_{T3}$, $R_{TK}$, $R_{TO}$) are nonlinear resistive bio-sensors which detect the amount of analytes via a biological component such as a protein, nucleic acid, biomimetic polymers or cells;

In one embodiment of the present invention, the sensors ($R_{T1}$, $R_{T2}$, $R_{T3}$, $R_{TK}$, $R_{TO}$) are nonlinear resistive optical light dependent resistors (LDRs).

In one embodiment of the present invention, the sensors ($R_{T1}$, $R_{T2}$, $R_{T3}$, $R_{TK}$, $R_{TO}$) are semiconducting magneto-resistive type sensors sensing the magnetic field applied thereto, for which the magnetoresistance has a nonlinear relationship with the applied magnetic field.

It is assumed that in the linearization circuit (1) described herein, all sensors ($R_{T1}$, $R_{T2}$, $R_{T3}$...$R_{TK}$, $R_{TO}$) are located in the same medium so that, they are equally influenced by temperature variations of that medium. Whenever the term "same type of thermistors" is used herein, it is to be understood that these components have identical resistance versus temperature (R-T) characteristics. Also, the terms "thermistor", and "NTC thermistor" are used invariably.

Precision, small size NTC "thermistor networks" are also commercially available (for example, 3.8mm bead length YSI 44018 and YSI 44019A are epoxy encapsulated components with three leads each containing two precision thermistors, while 7.1mm bead length YSI 44020 is formed by three thermistors with four leads. YSI 44018, YSI 44019A and YSI 44020 bead diameters are 2.4, 2.8 and 3.2 mm, respectively). Such elements are examples for suitable parts of embodiments of all devices described herein.

The linearization circuit (1) and the procedure used in its design as described herein allows one to determine linearization circuit (1) component values which yield highly reduced nonlinearity at the selected range of temperatures.

Operational amplifier (3) is a low input offset voltage, and low input bias current type, such as commercially available from Linear Technology, model LM 1001.

By linearization of the "sensor network" it is understood particularly herein that the Voltage Transfer Function (VTF) of the linearization circuit (1) is a linear approximation to the relationship between a physical property (such as temperature, flow, pressure, humidity, chemical gas concentration, etc.) measured by the same type of nonlinear sensors ($R_{T1}$, $R_{T2}$, $R_{T3}$...$R_{TK}$, $R_{TO}$) (such as for the measurement of aforementioned entities) whose nonlinear output are converted into electrical terms (voltage, current or resistance) at the input section of the circuit, to the voltage at output of the circuit.

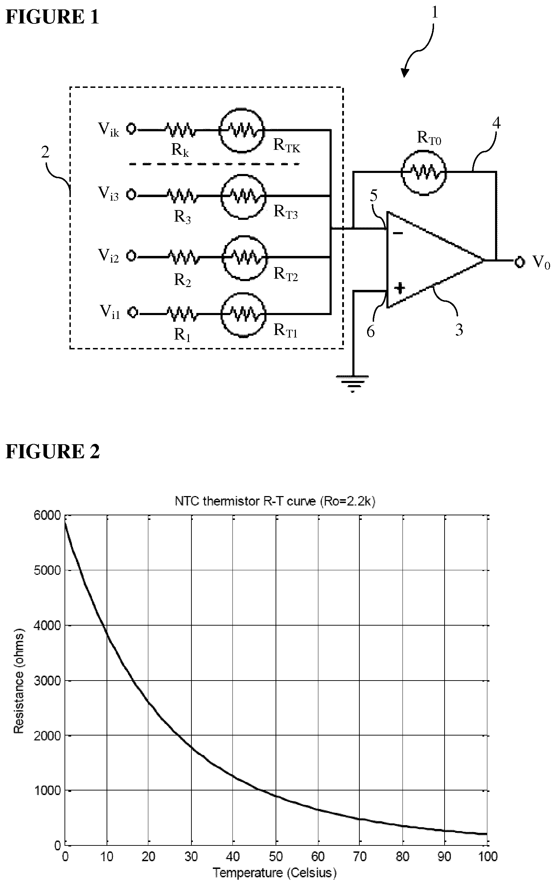

Temperature measurement modality by a highly non-linear sensor type, namely the thermistor element, is selected for illustrative purposes for explaining the operation and design steps of the device whose circuit schematic drawing is displayed in FIG.1.

In the case of NTC thermistors, exponential form of a thermistor resistance versus temperature (R-T) characteristic that includes so called the beta term may only be helpful in a narrow range of temperatures (generally limited in a temperature range of about 20 degrees of Celsius). Therefore, Steinhart-Hart model has been the choice for performing analyses involving thermistors in applications that take place in broader range of temperatures.

Therefore, it is an important aspect of this invention that a model equation pertaining to a sensor should be valid in a wide range of the physical property under consideration.

For the representative case of invention described herein, NTC thermistors' R-T data can be obtained from their manufacturer's data sheets in the form of Steinhart-Hart coefficients. However, a much more reliable way is to implement R-T data available in soft form, as professional SPICE models, which is the way used in this invention, as shown in FIG.2. These data are made available and accessible in a database through internet by almost all of the respective product (NTC thermistor) manufacturers in their web sites, and they are used (in an electronic device such as a computer) by design engineers worldwide.

The voltage at the output of the linearization circuit (1) as a function of temperature T can be written as

$$V_0(T) = -\sum_{k=1}^{n} \frac{R_{T0}}{R_{Tk} + R_{Sk}} \cdot V_{ik} \qquad \text{(Equation 1)}$$

where there are n series thermistor ($R_{Tk}$) and resistor ($R_k$) sections in the inverting input (5) path and another thermistor ($R_{T0}$) connected in the feedback path (4) of the operational amplifier (3). If $V_{ik}$, is provided by k voltage dividers consisting of only resistor elements from a common voltage reference $V_i$, and assuming that all thermistors are of the same type, then (dropping T dependence for notational simplification),

For n=2;

$R_T(T)=y$,

$$H = \frac{V_0(T)}{V_i} = -y\left(\frac{k_1}{y + R_1} + \frac{k_2}{y + R_2}\right) \qquad \text{(Equation 2)}$$

$$H = -\frac{x_1 y^2 + x_2 y}{y^2 + x_3 y + x_4} \qquad \text{(Equation 3)}$$

where,

$$x_1 = k_1 + k_2 \qquad \text{(Equation 4)}$$

$$x_2 = k_1 R_2 + k_2 R_1 \qquad \text{(Equation 5)}$$

$$x_3 = R_1 + R_2 \qquad \text{(Equation 6)}$$

$$x_4 = R_1 R_2 \qquad \text{(Equation 7)}$$

$$\mathbf{B} = \begin{bmatrix} x_1 \\ x_2 \end{bmatrix} = \mathbf{Ak} \qquad \text{(Equation 8)}$$

$$\mathbf{A} = \begin{bmatrix} 1 & 1 \\ R_2 & R_1 \end{bmatrix} \qquad \text{(Equation 9)}$$

$$\mathbf{k} = \mathbf{A}^{-1}\mathbf{B} \qquad \text{(Equation 10)}$$

Here, letters in bold represent matrices and vectors. $R_1$ and $R_2$ are found as follows: for each value of n, there are n unknown coefficients in denominator of the $n^{th}$ order transfer function. These coefficients are functions of the n unknown resistor values. General equation of "fixed resistor values" polynomial is

$$R^n + \sum_{k=1}^{n} (-1)^k \cdot R^{n-k} \cdot x_{n-k} = 0 \qquad \text{(Equation 11)}$$

Since n=2,

$$R^2 - x_3 R + x_4 = 0 \qquad \text{(Equation 12)}$$

Solution of this quadratic equation gives values of $R_1$, $R_2$.
For n=3;
$R_T(T) = y$,

$$H = \frac{V_0(T)}{V_i} = -\frac{x_1 y^3 + x_2 y^2 + x_3 y}{y^3 + x_4 y^2 + x_5 y + x_6} \qquad \text{(Equation 13)}$$

$$x_1 = k_1 + k_2 + k_3 \qquad \text{(Equation 14)}$$

$$x_2 = k_1(R_2 + R_3) + k_2(R_1 + R_3) + k_3(R_1 + R_2) \qquad \text{(Equation 15)}$$

$$x_3 = k_1 R_2 R_3 + k_2 R_1 R_3 + k_3 R_1 R_2 \qquad \text{(Equation 16)}$$

$$x_4 = R_1 + R_2 + R_3 \qquad \text{(Equation 17)}$$

$$x_5 = R_1 R_2 + R_2 R_3 + R_1 R_3 \qquad \text{(Equation 18)}$$

$$x_6 = R_1 R_2 R_3 \qquad \text{(Equation 19)}$$

General equation of "fixed resistor values" polynomial with n=3 becomes

$$R^3 - x_4 R^2 + x_5 R - x_6 = 0 \qquad \text{(Equation 20)}$$

Roots of this polynomial yield the values for $R_1$, $R_2$ and $R_3$.
Then, solving the following linear set of equations yields the values for $k_1$, $k_2$, $k_3$.

$$k = A^{-1}B \qquad \text{(Equation 21)}$$

where,

$$B = \begin{bmatrix} x_1 \\ x_2 \\ x_3 \end{bmatrix} \qquad \text{(Equation 22)}$$

$$A = \begin{bmatrix} 1 & 1 & 1 \\ R_2 + R_3 & R_1 + R_3 & R_1 + R_2 \\ R_2 R_3 & R_1 R_3 & R_1 R_2 \end{bmatrix} \qquad \text{(Equation 23)}$$

In summary, when there are n sensors ($R_{T1}$, $R_{T2}$, $R_{T3}$, $R_{TK}$) at the input section of the linearization circuit (1) as shown in FIG.1, and as explained above, an $n^{th}$ order rational (voltage transfer) function H (with equal orders of irreducible polynomials in both numerator and denominator) results. Such a rational function approximates a linear continuous function of a physical property (e.g., sensor temperature).

Overall, this is an optimization problem. Here, the objective function is the approximation error between the VTF of the linearization circuit (1) and the linear (first order) polynomial of the form ($M \times T + N$) within a given temperature

interval, where M is the slope of the linear equation and N is the intercept of the line with VTF of temperature linearity error as the ordinate (vertical) axis, while temperature parameter T is taken on the horizontal axis.

If the linearity error is to be minimized in the uniform norm, a best and unique rational function exists, and the approximation error of the best rational function has the property known as Chebyshev alternation property. When applied to the subject of present field of invention, this approximation error has 2n+2 alternations on a closed interval (of physical property); consequently it has 2n+1 roots on the physical property axis.

Further information on best approximations in the uniform norm and the properties that characterize a best approximating function in an interval can be found (for example) in books by Vladislav K. Dzyadyk, Igor A. Shevchuk "Theory of Uniform Approximation of Functions by Polynomials", Walter de Gruyter, 2008, or in another book by Theodore J. Rivlin, "An Introduction to the Approximation of Functions", Courier Corporation, 2003 , or in the book by G. G. Lorentz, "Approximation of Functions", American Mathematical Soc., Chelsea Publishing, 2005.

A numerical optimization method, such as Nelder Mead simplex algorithm is used in this process. However, other alternatives can also be employed by those skilled in the art.

In design examples given herein, objective function (absolute error of approximation) is minimized in least squares sense.

The slope and intercept values of the first order polynomial (desired) function are part of initial optimization vector $x_0$.

As an example, using sample NTC thermistor Resistance versus Temperature data for EPCOS-TDK C620/2200 type thermistor within the temperature range of 0°C and 100°C,
For n=2, uniform norm-16 optimization results are:

$k_1$= 0.23936 V/V, $k_2$= 0.3911 V/V
$R_1$= 3939.8 ohms, $R_2$ = 204.79 ohms.

For n=3, uniform norm-16 optimization results are:

$k_1$= 0.20086 V/V, $k_2$= 0.19776 V/V, $k_3$= 0.38436 V/V
$R_1$= 9947.8 ohms, $R_2$= 1010.8 ohms, $R_3$= 112.51 ohms.

Temperature measurement linearity deviation becomes smaller and smaller as the number of input sections (n) are increased.

Design steps for the linearization circuit (1) of FIG.1 are as follows:

a) VTF of a specific embodiment is selected for a particular value of denominator order (= numerator order) n, a positive integer.
b) Thermistor R-T data can be used as they are provided by vendors as SPICE circuit simulation software in a database, and these are exported to a mathematical computing software in a computer, such as MATLAB. This can be (for example) a (101 by 2) R-T matrix, i.e., thermistor resistance values at temperature values of T=0, 1, 2... 100°C.

c) An initial vector **x** (whose 2n+2 elements are the parameters to be optimized) is set up. This is a 6 element vector if n=2, and 8 element vector when n=3, including slope and intercept values.

d) VTF error is computed as errH = H - HH, where H is an $n^{th}$ order rational (voltage transfer) function, and HH is desired linear voltage transfer function with expected slope M and intercept N values, and then it is minimized in least squares sense for different p-norms, p=2, 4, 8, 16. Here the p-norm of an n element vector x is defined as

$$Norm(x, p) = |X|_p \equiv \left( \sum_{i=1}^{n} |X|_p \right)^{1/p} \qquad \text{(Equation 25)}$$

e) Predicted value of temperature of the sensor is computed as

$$TT = (H - N) / M \qquad \text{(Equation 26)}$$

f) The temperature linearity error is calculated as

$$errT = TT - T \qquad \text{(Equation 27)}$$

at temperature values of T=0, 1, 2,...,100°C. The results are displayed in graphical form.

At the beginning of optimization, all k coefficients and resistances are assumed to have equal values, for example, (for n=2) $k_1$= $k_2$= 0.125 V/V, $R_1$=$R_2$= 1000 ohms.

Desired slope and intercept values are forced over initial parameter vector for p-norm, p=2, as well as for consecutive p-norms of p=4, p=8 and p=16, during optimization process. In other words, while initial parameter estimation vectors' components are modified at the end of each optimization stage for a given p-norm, and this modified vector is used as the initial estimate for the next step p-norm evaluation, slope and intercept values are kept the same, starting from the initial vector x0 when p=2.

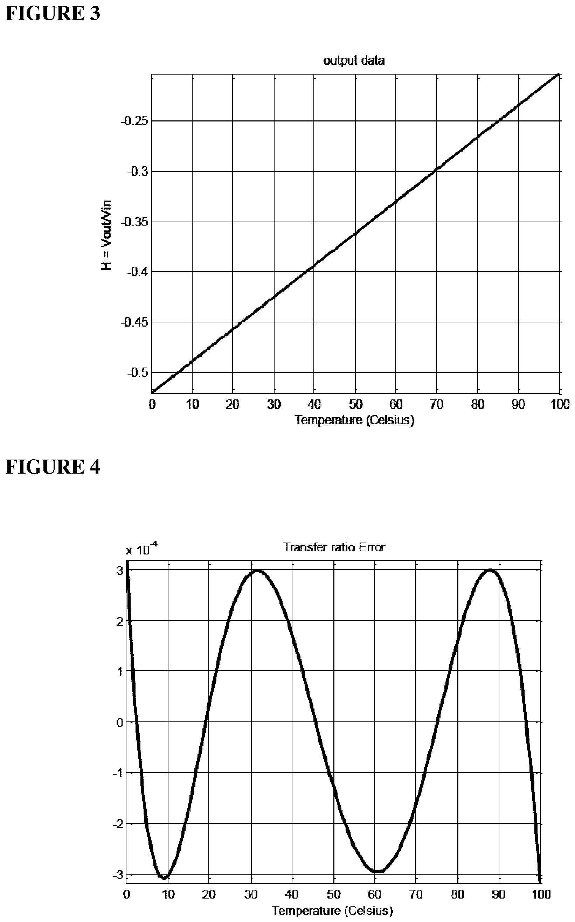

Note that slightly relaxing the slope and intercept condition and using the linearization circuit (1) of FIG.1 provides twice the reduction in linearization error within the same temperature range. These can be clearly seen if (for example) FIG.5 presented herein is compared with previous art (FIG 3 of Renneberg). These figures display temperature linearity error curves for individual embodiments. Note that while the peak error given in previous art is about 170mK, the peak error value depicted in FIG.5 herein is almost half of the one introduced by previous art. It should be pointed out that both voltage transfer functions have the same order (n=2).

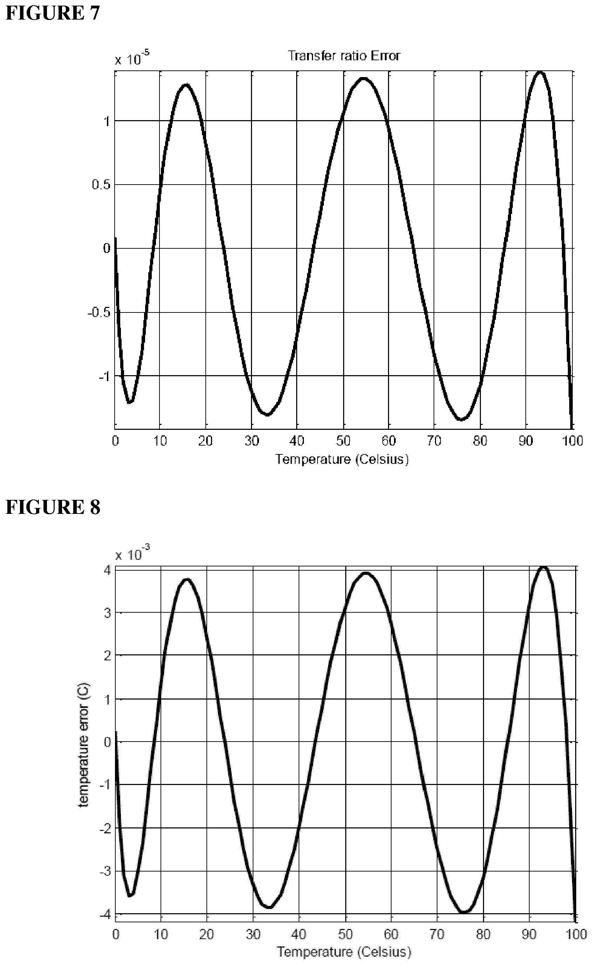

For n=3, FIG.8 presented herein can be compared with FIG.5 shown in the same previous art. The peak error given in previous art is about 9 mK. On the other hand, the peak error value depicted in FIG.5 herein is 4 mK, i.e., less than half of the temperature linearization error introduced by previous art.

These values do not show any significant thermistor type dependence, at least between thermistors employed (EPCOS-TDK C620/2200 and YSI45008)

**Claims**

1. A linearization circuit (1) for linearizing of resistive sensors ($R_{T1}$, $R_{T2}$, $R_{T3}$, $R_{TK}$) having nonlinear behavior, the circuit comprises;

   - a sensor circuit (2) having a plurality of sub-circuits connected parallel to each other and each of which comprises one of said resistive sensors ($R_{T1}$, $R_{T2}$, $R_{T3}$, $R_{TK}$) and a resistor ($R_1$, $R_2$, $R_3$, $R_k$),
   - an inverting operational amplifier (3) having a feedback path (4) where a resistive sensor ($R_{TO}$) of the same type as in the sub-circuits is connected, and whose inverting input (5) is connected to the sensor circuit (2).

2. The linearization circuit (1) according to the claim 1, wherein the resistive sensors (RT1, $R_{T2}$, $R_{T3}$, $R_{TK}$, $R_{TO}$) are negative temperature coefficient thermistors.

3. The linearization circuit (1) according to claim 1, **wherein** Voltage Transfer Function (VTF) is a function of circuit parameters.

4. The linearization circuit (1) according to claim 1, **wherein** the relationship between output voltage of the circuit (1) and a property sensed by the resistive sensors ($R_{T1}$, $R_{T2}$, $R_{T3}$, $R_{TK}$) is a linear function.

5. The linearization circuit (1) according to claim 1, **wherein** if linearity error of approximation is minimized in uniform norm sense, the approximation error of the best rational function has a Chebyshev alternation property where this approximation error has 2n+2 alternations on a closed interval of physical property for an nth order VTF; consequently it has 2n+1 roots on the physical property axis.

6. The linearization circuit (1) according to claim 2, **wherein** the thermistors ($R_{T1}$, $R_{T2}$, $R_{T3}$, $R_{TK}$, $R_{TO}$) are used in "zero power" state, thus reducing self-heating effects on resistance of these elements.

7. The linearization circuit (1) according to claim 1, **wherein** the resistive sensors ($R_{T1}$, $R_{T2}$, $R_{T3}$, $R_{TK}$, $R_{TO}$) are nonlinear resistive optical light dependent resistors (LDRs).

8. The linearization circuit (1) according to claim 1, wherein the resistive sensors (RT1, RT2, $R_{T3}$, $R_{TK}$, $R_{TO}$) are nonlinear resistive chemiresistors which provide information about the chemical composition of their environment.

9. The linearization circuit (1) according to claim 1, **wherein** the resistive sensors ($R_{T1}$, $R_{T2}$, $R_{T3}$, $R_{TK}$, $R_{TO}$) are nonlinear resistive bio-sensors which detect the amount of analytes via a biological component such as protein, nucleic acid, biomimetic polymers or cells.

10. The linearization circuit (1) according to claim 1, **wherein** the resistive sensors ($R_{T1}$, $R_{T2}$, $R_{T3}$, $R_{TK}$, $R_{TO}$) are semiconducting magneto-resistive type sensors sensing the magnetic field applied thereto, for which the magnetoresistance has a nonlinear relationship with the applied magnetic field.

**Patentansprüche**

1. Linearisierungsschaltung (1) zum Linearisieren von Widerstandssensoren ($R_{T1}$, $R_{T2}$, $R_{T3}$, $R_{TK}$) mit nichtlinearem Verhalten, die Schaltung umfasst;

   - eine Sensorschaltung (2) mit einer Vielzahl von parallel miteinander verbundenen Teilschaltungen, von denen jede einen der Widerstandssensoren ($R_{T1}$, $R_{T2}$, $R_{T3}$, $R_{TK}$) und einen Widerständ ($R_1$, $R_2$, $R_3$, $R_k$) umfasst,
   - einen invertierenden Operationsverstärker (3) mit einem Rückkopplungspfad (4), bei dem ein Widerstandssensor ($R_{TO}$) des gleichen Typs wie in den Teilschaltungen verbunden ist, und dessen invertierender Eingang (5) mit der Sensorschaltung (2) verbunden ist.

2. Die Linearisierungsschaltung (1) nach Anspruch 1, **wobei** die Widerstandssensoren ($R_{T1}$, $R_{T2}$, $R_{T3}$, $R_{TK}$, $R_{TO}$) sind negative Temperaturkoeffizienten-Thermistoren.

3. Linearisierungsschaltung (1) nach Anspruch 1, **wobei** die Spannungsübertragungsfunktion (VTF) eine Funktion der Schaltungsparameter ist.

4. Linearisierungsschaltung (1) nach Anspruch 1, **wobei** die Beziehung zwischen der Ausgangsspannung der Schaltung (1) und einer von den Widerstandssensoren ($R_{T1}$, $R_{T2}$, $R_{T3}$, $R_{TK}$) erfassten Eigenschaft eine lineare Funktion ist.

5. Linearisierungsschaltung (1) nach Anspruch 1, **wobei** wenn der Linearitätsfehler der Approximation im einheitlichen Normsinn minimiert wird, der Approximationsfehler der besten rationalen Funktion eine Tschebyscheff-Wechsel-Eigenschaft aufweist, bei der dieser Approximationsfehler (2n+2) Wechsel in einem geschlossenen Intervall der physikalischen Eigenschaft für eine VTF der n-ten Ordnung aufweist; daher (2n+1) Wurzeln auf der Achse der physikalischen Eigenschaft aufweist.

6. Linearisierungsschaltung (1) nach Anspruch 2, **wobei** die Thermistoren ($R_{T1}$, $R_{T2}$, $R_{T3}$, $R_{TK}$, $R_{TO}$) im Zustand "Nullstrom" verwendet werden, wodurch Selbsterhitzungseffekte auf den Widerstand dieser Elemente reduziert werden.

7. Linearisierungsschaltung (1) nach Anspruch 1, **wobei** die Widerstandssensoren ($R_{T1}$, $R_{T2}$, $R_{T3}$, $R_{TK}$, $R_{TO}$) nichtlineare widerstandsfäShige optische lichtabhängige Widerstände (LDRs) sind.

8.  Linearisierungsschaltung (1) nach Anspruch 1, **wobei** die Widerstandssensoren ($R_{T1}$, $R_{T2}$, $R_{T3}$, $R_{TK}$, $R_{TO}$) nichtlineare widerstandsfähige Chemiresistoren sind, die Informationen über die chemische Zusammensetzung ihrer Umgebung liefern.

9.  Linearisierungsschaltung (1) nach Anspruch 1, **wobei** die Widerstandsensoren ($R_{T1}$, $R_{T2}$, $R_{T3}$, $R_{TK}$, $R_{TO}$) nichtlineare widerstandsfähige Biosensoren sind, die die Menge der Analyten über eine biologische Komponente wie Protein, Nukleinsäure, biomimetische Polymere oder Zellen erfassen.

10. Linearisierungsschaltung (1) nach Anspruch 1, **wobei** die Widerstandssensoren ($R_{T1}$, $R_{T2}$, $R_{T3}$, $R_{TK}$, $R_{TO}$) halbleitende magnetoresistive Sensoren sind, die das darauf aufgebrachte Magnetfeld erfassen, bei denen der Magnetwiderstand eine nichtlineare Beziehung zu dem aufgebrachten Magnetfeld aufweist.

**Revendications**

1.  Circuit de linéarisation (1) pour linéariser des capteurs résistifs ($R_{T1}$, $R_{T2}$, $R_{T3}$, $R_{TK}$) ayant un comportement non linéaire, le circuit comprenant ;

    - un circuit de capteur (2) ayant une pluralité de sous-circuits connectés en parallèle les uns aux autres et dont chacun comprend un desdits capteurs résistifs ($R_{T1}$, $R_{T2}$, $R_{T3}$, $R_{TK}$) et une résistance ($R_1$, $R_2$, $R_3$, $R_k$),
    - un amplificateur opérationnel inverseur (3) ayant un chemin de rétroaction (4) où un capteur résistif ($R_{TO}$) du même type que dans les sous-circuits est connecté, et dont l'entrée inverseur (5) est connectée au circuit de capteur (2).

2.  Circuit de linéarisation (1) selon la revendication 1, **dans lequel** les capteurs résistifs ($R_{T1}$, $R_{T2}$, $R_{T3}$, $R_{TK}$, $R_{TO}$) sont des thermistances à coefficient de température négatif.

3.  Circuit de linéarisation (1) selon la revendication 1, **dans lequel** la fonction de transfert de tension (VTF) est une fonction des paramètres du circuit.

4.  Circuit de linéarisation (1) selon la revendication 1, **dans lequel** la relation entre la tension de sortie du circuit (1) et une propriété détectée par les capteurs résistifs ($R_{T1}$, $R_{T2}$, $R_{T3}$, $R_{TK}$) est une fonction linéaire.

5.  Circuit de linéarisation (1) selon la revendication 1, **dans lequel** si l'erreur de linéarité de l'approximation est minimisée au sens de la norme uniforme, l'erreur d'approximation de la meilleure fonction rationnelle a une propriété d'alternance de Chebyshev où cette erreur d'approximation a 2n+2 alternances sur un intervalle fermé de propriété physique pour un nième ordre VTF ; elle a donc 2n+1 racines sur l'axe des propriétés physiques.

6.  Circuit de linéarisation (1) selon la revendication 2, **dans lequel** les thermistances ($R_{T1}$, $R_{T2}$, $R_{T3}$, $R_{TK}$, $R_{TO}$) sont utilisées à l'état "puissance nulle", réduisant ainsi les effets d'auto-échauffement sur la résistance des éléments.

7.  Circuit de linéarisation (1) selon la revendication 1, **dans lequel** les capteurs résistifs ($R_{T1}$, $R_{T2}$, $R_{T3}$, $R_{TK}$, $R_{TO}$) sont des résistances optiques non linéaires dépendant de la lumière (LDR).

8.  Circuit de linéarisation (1) selon la revendication 1, **dans lequel** les capteurs résistifs ($R_{T1}$, $R_{T2}$, $R_{T3}$, $R_{TK}$, $R_{TO}$) sont des résistances chimiques résistives non linéaires qui fournissent des informations sur la composition chimique de leur environnement.

9.  Circuit de linéarisation (1) selon la revendication 1, **dans lequel** les capteurs résistifs ($R_{T1}$, $R_{T2}$, $R_{T3}$, $R_{TK}$, $R_{TO}$) sont des biocapteurs résistifs non linéaires qui détectent la quantité d'analytes via un composant biologique tel que protéine, acide nucléique, polymères biomimétiques ou cellules.

10. Circuit de linéarisation (1) selon la revendication 1, **dans lequel** les capteurs résistifs ($R_{T1}$, $R_{T2}$, $R_{T3}$, $R_{TK}$, $R_{TO}$) sont des capteurs semi-conducteurs de type magnétorésistif détectant le champ magnétique qui leur est appliqué, pour lesquels la magnétorésistance a une relation non linéaire avec le champ magnétique appliqué.

**FIGURE 1**

**FIGURE 2**

**FIGURE 3**

**FIGURE 4**

**FIGURE 5**

**FIGURE 6**

## FIGURE 7

## FIGURE 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090063070 A1
- CN 104505202
- WO 2009145629 A1, T. Tiek, P. T. J. Gennissen
- US 6449571 B, F. Tarig and T.I. Pattantyus
- NL 9301409 A, C.M.E. Peters, M.J. Groot
- JP 5060621 O, M. Kazunari
- US 005116136 A, W.H. Newman
- CN 88203185 U
- PL 243159 A1, A. Roman; S. Seweryn; K. Jerzy
- US 4556330 A, P. Regtien

- US 4148220 A, W. R. Spofford
- US 4132116HE H, Zeeb
- US 4106341 A, J. J. Serrano
- US 4215336 A, T.W.Smith
- US 4060715 A, L. B. Scott
- US 3766782 A, A. Shimamura
- US 3652921 A, L. N. Nye
- US 3316765 A, H. W. Trolander and R. W. Harruff
- US 3185974 A, R.C. Doane
- US 2764731 A, L. F. Koerner

### Non-patent literature cited in the description

- **C.P. RENNEBERG.** *A circuit and method for fitting the output of a sensor to a predetermined linear relationship,* 05 March 2009
- **C. RENNEBERG ; T. LEHMANN.** Analog circuits for thermistor linearization with Chebyshev-optimal linearity error. *18th European Conference on Circuit Theory and Design,* 2007, 910-913
- **J. LUKIC ; D. DENIC.** A Novel Design of an NTC Thermistor Linearization Circuit. *Metrol. Meas. Syst.,* 2015, vol. 22 (3), 351-362
- **M. BIEGERT.** Linearize thermistors with new formula. *EDN,* 03 March 2014
- **LOPEZ-MARTIN, A.J. ; CARLOSENA, A.** Sensor signal linearization techniques: a comparative analysis. *Proc. of IEEE LASCAS,* 2013
- **CUSCO.** *Peru,* 2013, 1-4
- **A. R. SARKAR ; D. DEY, S. MUNSHI.** Linearization of NTC Thermistor Characteristic Using Op-Amp Based Inverting Amplifier. *IEEE Sensors Journal,* December 2013, vol. 13 (12), 46-21
- **X. WANG ; G. WEI ; J. SUN.** Free knot recursive B-spline for compensation of nonlinear smart sensors. *Measurement,* 2011, vol. 44 (5), 888-894
- **N. MADHU MOHAN ; V. JAGADEESH KUMAR ; P. SANKARAN.** Linearizing dual-slope digital converter suitable for a thermistor. *IEEE Trans. Instrum. Meas.,* December 2010, vol. 60 (5), 1515-1521
- **A. U. KESKIN.** Comments on the Sensor calibration and compensation using artificial neural network. *ISA Transactions,* 2009, vol. 48, 143-144

- **J. RIVER ; G. HERRERA ; M. CHACON.** Improved progressive polynomial algorithm for self-calibration and optimal response in smart sensors. *Measurement,* 2009, vol. 42 (9), 1395-1401
- **Z. P. NENOVA ; T. G. NENOV.** Linearization circuit of the thermistor connection. *IEEE Trans. Instrum. Meas.,* February 2009, vol. 58 (2), 441-449
- **A. ABUDHAHIR ; S. BASKAR.** An evolutionary optimized nonlinear function to improve the linearity of transducer characteristics. *Meas.Sci. Technol.,* April 2008, vol. 19 (4), 72-76
- **V. C. ROSA ; L. S. PALMA ; A. OLIVEIRA ; T. R. TORRES.** An inherently linear transducer using thermistor practical approach. *Proc. 3rd Int. Conf. Sens. Technol.,* 2008, 491-495
- **J.C. PATRA ; G. CHAKRABORTY ; P.K. MEHER.** Neural network-based robust linearization and compensation technique for sensors. *IEEE Trans.Circuits Syst. I,* June 2008, vol. 55 (5), 1316-1327
- **C. RENNEBERG ; T. LEHMANN.** Analog circuits for thermistor linearization with Chebyshev-optimal linearity error. *18th European Conference on Circuit Theory and Design,* 2007, 910-913
- **A U KESKIN.** A simple analog behavioural model for NTC thermistors including selfheating effect. *Sensors and Actuators A,* 2005, vol. 118, 244-247
- **A U KESKIN ; T.M.YANAR.** Steady-state solution of loaded thermistor problems using an electrical equivalent circuit model. *Meas. Sci. Technol.,* 2004, vol. 15, 2163-2169

- **S. KALIYUGAVARADAN ; P. SANKARAN ; G.K. MURTIV.** A new compensation scheme for thermistors and its implementation for response linearization over a wide temperature range. *IEEE Transactions on Instrumentation and Measurement,* 1993, vol. 42 (5), 952-956
- **D. PATRANABIS ; S. GHOSH ; C. BAKSHI.** Linearizing transducer characteristics. *IEEE Trans. Instrum. Meas.,* March 1988, vol. 37 (1), 66-69
- **D. K. STANKOVIC.** Linearized thermistor multivibrator bridges for temperature measurement. *IEEE Trans. Instrum. Meas.,* March 1974, vol. 2, 179-180
- **F.N. TROFIMENKOFF ; R.E. SMALLWOOD.** Analog multiplier circuit linearizes transducer output. *IEEE Trans. Instrum. Meas.,* September 1974, vol. 3, 195-197
- **M. B. BROUGHTON.** Analysis and Design of Almost-Linear One- Thermistor Temperature Transducers. *IEEE Trans. on Instrum. Meas.,* March 1974, vol. Im-23 (1
- **VLADISLAV K. DZYADYK ; IGOR A. SHEVCHUK.** Theory of Uniform Approximation of Functions by Polynomials. *Walter de Gruyter,* 2008
- **THEODORE J. RIVLIN.** An Introduction to the Approximation of Functions. *Courier Corporation,* 2003
- Approximation of Functions. **G. G. LORENTZ.** American Mathematical Soc. Chelsea Publishing, 2005